# EUROPEAN PATENT APPLICATION

(11) **EP 0 557 683 A1**
(43) Date of publication of application: **01.09.1993**
(21) Application number: 93100043.4
(22) Date of filing: 05.01.1993
(51) Int. Cl.: G03B 15/05, G03B 17/04

(54) **Compact camera with integral flash unit**

(30) Priority: 27.01.1992 US 825882
(71) Applicant: EASTMAN KODAK COMPANY, Rochester, New York 14650-2201 (US)
(72) Inventor: Schappler, Joseph John, c/o Eastman Kodak Company, Rochester, New York 14650-2201 (US)
(74) Representative: Blickle, K. Werner, Dipl.-Ing.

(57) **Abstract**

A photographic camera (1) comprises a camera body (3), an electronic flash unit (5) movable relative to the camera body between a storage position and a flash-use position, and a viewfinder element (25 or 35) movable responsive to movement of the flash unit from its flash-use position to its storage position from a viewing position to a storage position. According to the invention, the flash unit (5) and the viewfinder element (25 or 35) are supported to locate a portion of the flash unit in a particular space (11) formerly occupied by the viewfinder element when the viewfinder element is moved from its viewing position to its storage position responsive to movement of the flash unit from its flash-use position to its storage position.

## Description

The invention relates generally to the field of photography, and particularly to a compact camera with an optical viewfinder and an extendable flash unit.

A current trend in camera design is to incorporate an electronic flash unit in the camera body and yet make such body relatively small in size in order to increase its ease of storage, portability and handling. Examples of smaller size cameras with built-in electronic flash units are the various disk film cameras, such as previously sold by Eastman Kodak Company and others. As a consequence of making a camera smaller in size, the separation between a built-in flash unit and the taking lens is reduced, thereby possibly creating an undesirable effect commonly known as "red-eye". When using a flash unit and a color print film, red-eye is typified by the pupils in the eyes of a person being photographed coming out red-tinted on a developed color print. Such phenomenon is attributable to the incidence into the taking lens of the red light reflected from the retinas in the person's eyes illuminated by the flash light.

Red-eye may be substantially avoided by increasing the separation between the flash unit and the taking lens. As a result, light from the flash unit will reach the eyes of a person being photographed at too great an angle to be reflected by his retinas into the taking lens. In U.S. Pat. Nos. 4,231,645, granted Nov. 4, 1980, 4,319,818, granted Mar. 16, 1982, 4,557,571, granted Dec. 10, 1985, D. 284,973, granted Aug. 5, 1986, D. 285,087, granted Aug. 12, 1986, 4,847,647, granted July 11, 1989, 4,983,999, granted Jan. 8, 1991, and 4,996,548, granted Feb. 26, 1991, red-eye appears to be substantially avoided without increasing the size of a compact 35mm camera to any great degree by providing a built-in electronic flash unit that is pivotable with respect to the camera body. The flash unit is pivotable between an inactive folded or storage position in which it forms an integrated part of the camera body in front of the camera lens and/or the camera viewfinder, and an operative erect position in which it is sufficiently removed from the lens to permit picture-taking substantially without the occurrence of red-eye.

More to the point, in U.S. Pat. Nos. D. 284,973, 285,087, 4,983,999 and 4,996,548, a 35mm camera comprises a camera body and a flip-up flash unit including a head part having a flash emission window and a pair of front and rear supporting parts for the head part. The supporting parts are pivotally connected to the camera housing to permit swinging movement of the flash unit to a folded storage position in which the head part and the supporting parts cover respective portions of the camera body and to a non-folded operative position in which the head part and the supporting parts are elevated from the camera body with the flash emission window substantially facing a subject to be photographed and with the rear supporting part located behind the front supporting part to brace the front one. At least one of the supporting parts may be releasably detented when the flash unit is in the folded and non-folded positions to secure the flash unit in the respective positions.

Also, U.S. Pat. No. 5,005,032, granted Apr. 2, 1991, discloses a compact camera with a flip-up flash which has a viewfinder opening for viewing a subject to be photographed when the flash unit is swung to an operative position elevated above the camera body. A finder objective lens and a finder eyelens are each swung to individual viewing positions optically aligned with the viewfinder opening in response to movement of the flash unit to its operative position.

According to the invention, a photographic camera comprising a camera body, an electronic flash unit movable relative to the camera body between a storage position and a flash-use position, and a viewfinder element movable responsive to movement of the flash unit from its flash-use position to its storage position, is characterized in:
said flash unit and said viewfinder element are supported to locate a portion of the flash unit in a particular space formerly occupied by the viewfinder element when the viewfinder element is moved from its viewing position to its storage position responsive to movement of the flash unit from its flash-use position to its storage position. This arrangement as compared to the known prior art provides improved compactness for a photographic camera.
FIG. 1 is a rear elevation view of a compact camera according to a preferred embodiment of the invention, showing an integral flash unit in an elevated flash-use position;
FIG. 2 is an exploded rear perspective view of a portion of the compact camera and the flash unit;
FIG. 3 is a side elevation view in section of the compact camera and the flash unit; and
FIG. 4 is a side elevation view similar to FIG. 3, but of an alternate embodiment of the invention.

The invention is described as being embodied in a compact 35mm camera with a built-in electronic flash unit. Because such photographic cameras have become well known, this description is directed in particular to camera elements forming part of or cooperating directly with the preferred embodiment. It is to be understood, however, that camera elements not specifically shown or described may take various forms known to persons of ordinary skill in the art.

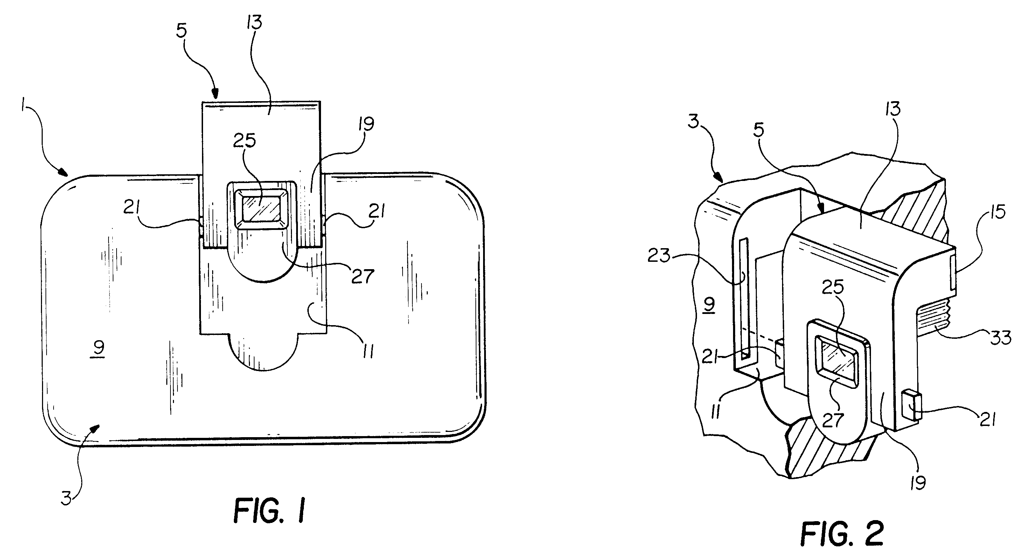

Referring now to the drawings, FIGS. 1, 2, and 3 show a compact camera 1 comprising a camera body 3, an electronic flash unit 5, and a direct see-through viewfinder tunnel 7 extending front-rear in the camera body.

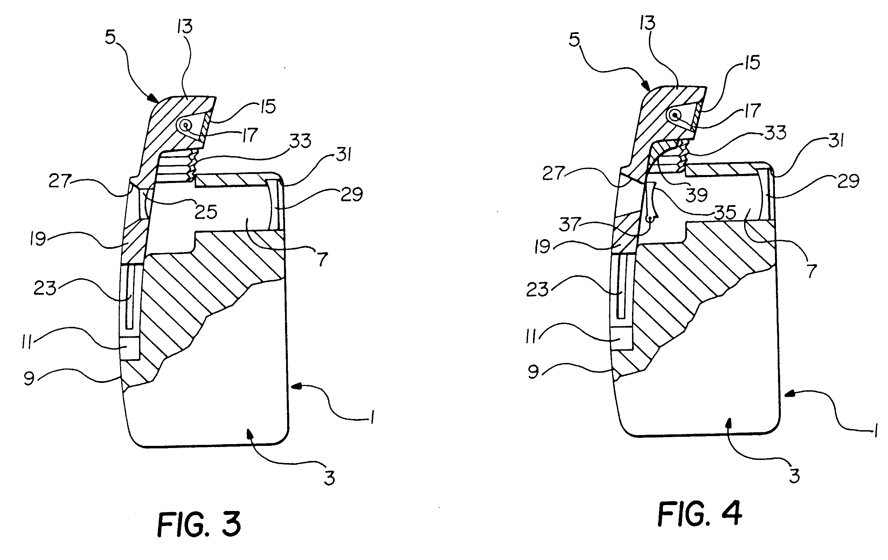

The camera body 3 includes a rear wall 9 having an external recess 11. The flash unit 5 includes a head part 13 having a flash emission window 15, located in front of a flash tube 17, and a neck part 19 for the head part. The neck part 19 has a pair of aligned ears 21 which extend into respective slots 23 in the camera body 3 at the recess 11 to slidably support the flash unit 5 for sliding movement along the recess between an inactive storage position, shown in FIG. 2, substantially inside the recess, and a flash-use position, shown in FIGS. 1 and 3, substantially elevated from the recess. Known releasable detents, not shown, releasably secure the flash unit 5 in its storage and flash-use positions.

In the flash-use position, a finder eyelens 25, fixed within a viewing opening 27 in the neck part 19, is aligned with a finder objective lens 29, fixed within a front opening 31 in the camera body 3, and the flash emission window 15 is elevated above the camera body. See FIG. 3. A rubber bellows 33 is located beneath the head part 13 as shown in FIG. 3 to serve as a light shield to prevent ambient light from entering into the camera body 3 when the flash unit 5 is in its flash-use or storage position. In the storage position, the flash emission window 15 is concealed by the camera body 3 and the head part 13 blocks the viewfinder tunnel 7, ie. the head part occupies the space formerly occupied by the eyelens 25. See FIG. 2.

### Alternate Embodiment

FIG. 4 shows an alternative embodiment of the compact camera 1 in which parts that are the same as in FIGS. 1-3 are indicted by identical reference numbers.

In lieu of the finder eyelens 25 being fixed to the neck part 19 of the flash unit 5 as in FIGS. 1-3, the embodiment in FIG. 4 includes a finder eyelens 35 that is supported via a pivot pin 37 for swinging movement between an erect viewing position aligned with the finder objective lens 29 and a folded storage position. A return spring, not shown, biases the eyelens 35 from its storage position to its viewing position. A camming rib 39, located on the flash unit 5 beneath the head part 13 and within the bellows 33, serves to swing or depress the eyelens 35 from its viewing position to its storage position as the flash unit is lowered from its viewing position to its storage position. When the flash unit 5 is in its storage position, the bellows 33 covers the eyelens 35 and the camming rib 39 holds the eyelens in its storage position against the contrary urging of the return spring. Also, the head part 13 occupies the space formerly occupied by the eyelens 35.

The invention has been described with reference to a preferred embodiment and in alternative embodiment. However, it will be understood that various modifications can be effected within the ordinary skill in the art without departing from the scope of the invention.

## Claims

1. A photographic camera (1) comprising a camera body (3), an electronic flash unit (5) movable relative to said camera body between a storage position and a flash-use position, and a viewfinder element (25 or 35) movable responsive to movement of said flash unit from its flash-use position to its storage position from a viewing position to a storage position, is characterized in that:
said flash unit (5) and said viewfinder element (25 or 35) are supported to locate a portion of the flash unit in a particular space (11) formerly occupied by the viewfinder element when the viewfinder element is moved from its viewing position to its storage position responsive to movement of the flash unit from its flash-use position to its storage position.

2. A photographic camera (1) as recited in claim 1, wherein said flash unit (5) is supported for sliding movement between its storage and flash-use positions and said viewing element (25 or 35) is supported for pivotal movement between its viewing and storage positions.

3. A photographic camera as recited in claim 2, wherein said flash unit (5) includes integral means (39) for pivoting said viewfinder element (35) from its viewing position to its storage position as the flash unit is slid from its flash-use position to its storage position.

4. A photographic camera (1) as recited in claim 1, wherein said camera body (3) includes a rear wall (9) having an external recess (11), and said flash unit (5) is supported for sliding movement along said external recess to substantially inside the recess when the flash unit is in its storage position and to substantially outside the recess when the flash unit is in its flash-use position.

5. A photographic camera (1) as recited in claim 4, wherein said flash unit (5) includes a head part (13) having a flash emission window (15) and a neck part (19) for said head part slidably connected to said rear wall (9) within said external recess (11).

6. A photographic camera (1) as recited in claim 5, wherein said neck part (19) has a viewfinder opening (29), and said viewfinder element (25) is fixed in said viewfinder opening.

7. A photographic camera (1) as recited in claim 5, wherein said neck part (19) has a viewfinder opening (27) located to align with said viewfinder element (35) when the viewfinder element is moved from its viewing position to its storage position responsive to movement of said flash unit (5) from its flash-use position to its storage position.

8. A photographic camera (1) as recited in claim 7, wherein said viewfinder element (35) is supported for pivotal movement inside said camera body (3) between its storage and viewing positions, and said flash unit (5) includes integral means (39) for pivoting said viewfinder element from its viewing position to its storage position as the flash unit is slid from its flash-use position to its storage position.

9. A photographic camera (1) as recited in claim 1, wherein said flash unit (5) includes a head part (13) having a flash emission window (15) and a neck part (19) for said head part slidably connected to said camera body (3) to locate said head part in the particular space (11) formerly occupied by said viewfinder element (25 or 35) when the viewfinder element is moved from its viewing position to its storage position responsive to movement of the flash unit from its flash-use position to its storage position.

10. A photographic camera (1) comprising a camera body (3), an electronic flash unit (5) having a flash emission window (15), and a viewfinder tunnel (7), is characterized in that:
said flash unit (5) is slidably connected to a rear portion (9) of said camera body for movement to a storage position in which said flash emission window (15) is concealed by the camera body and the flash unit blocks said viewfinder tunnel (7) and a flash-use position in which the flash emission window is elevated from the camera body and the flash unit does not block the viewfinder tunnel.
